# EUROPEAN PATENT SPECIFICATION

(11) **EP 2 630 826 B1**
(45) Date of publication and mention of the grant of the patent: **30.06.2021**
(21) Application number: 11764737.0
(22) Date of filing: 04.10.2011
(51) Int. Cl.: H04W 48/12, H04W 36/14, H04W 68/12, H04W 88/06, H04W 88/10

(54) **METHOD OF OPTIMISING DATA EXCHANGE IN A COMMUNICATIONS NETWORK**
VERFAHREN ZUR DATENAUSTAUSCHOPTIMIERUNG IN EINEM KOMMUNIKATIONSNETZ
PROCÉDÉ D'OPTIMISATION D'UN ÉCHANGE DE DONNÉES DANS UN RÉSEAU DE COMMUNICATION

(30) Priority: 22.10.2010 WO PCT/EP2010/065980
(43) Date of publication of application: 28.08.2013
(73) Proprietor: HMD Global Oy, 02610 Espoo (FI)
(72) Inventor: ROSE, Dirk, 80336 Munich (DE); WEGMANN, Bernhard, 83607 Holzkirchen (DE); WALDHAUSER, Richard, 81249 München (DE); SUERBAUM, Clemens, 81379 München (DE); SARTORI, Cinzia, 80634 Munchen (DE); KORDYBACH, Krzysztof, PL-24-100 Pulawy (PL); VIERING, Ingo, 81541 Munich (DE)
(74) Representative: Papula Oy
(86) International application number: PCT/EP2011/067282
(87) International publication number: WO 2012/052289

(56) References cited:
- EP-A1- 1 915 004
- WO-A1-2009/127276
- US-A1- 2007 019 575
- US-A1- 2008 102 832
- US-A1- 2009 104 907

## Description

### FIELD OF THE INVENTION

The invention generally relates to a method of optimising data exchange in a communications network. More particularly, the invention relates to wireless communications networks in which energy saving measures are being carried out.

### BACKGROUND OF THE INVENTION

Access to a wireless network may be provided by more than one radio access technology (RAT) at once. For example, a network may be covered by GSM, as well as UMTS and/or LTE and/or other RATs (e.g., EDGE).

Nowadays energy saving (ES) in wireless communications network is attracting a large amount of attention and is the main part of an initiative often stated as "green radio". The main reasons behind are twofold. Firstly, strong measures need to be taken to counteract global warming by reducing the CO2 footprint of radio networks. Secondly, there are also clear economic motivations for ES in radio networks, considering the increasing costs.

In recent 3GPP (General Partnership Project) discussions, an inter-RAT scenario, for example LTE coverage with 2G/3G overlay, has been detected as the most promising use case in order to deploy ES without compromising coverage and QoS (Quality of Service) constraints.

This means that, in most relevant practical scenarios, a given geographical area is covered by more than one technology, for example:
1) GSM and UMTS
2) GSM and LTE
3) GSM and UMTS and LTE

This situation allows for high a potential of inter-RAT ES mechanisms by, for example, switching off temporarily (in times of low traffic demand, e.g. during night) not/low utilized UMTS and/or LTE cells. Coverage, basic service and the wake-up capability can then be provided by GSM.

As consequence of switch-off decisions of UMTS and/or LTE cells, which are in ES-state, a basic coverage is provided by GSM (ES-compensation state). The GSM cell may now detect offered traffic in the considered area. If the QoS requirements of the request cannot be provided by GSM, it may "wake-up" a cell (in other words de-activate an ES state) of a superior technology (UMTS or LTE).

For example, if a UMTS or LTE capable subscriber station or user equipment (UE) requests a high-demand service such as streaming, video call, FTP, WWW, from the network while UMTS/LTE is in an ES state, a decision can be made to transfer the connection between the UE and the network from GSM to UMTS or LTE. In this way a full coverage of all technology variants is virtually guaranteed as the appropriate technology is available when needed.

This also complies with the so-called "single network strategy"; i.e., the different RAT should not be seen as individual networks, which may co-operate, but rather as one single network which includes different access technologies but behaves as a single entity.

However, the situation in idle mode looks somehow different. Assuming LTE and/or UMTS is switched off, the UE would camp in GSM. In this camped/idle state the UE is receiving SysInfo (system information) via the GSM BCH (broadcast channel) and is enabled for incoming mobile terminating calls (MTC) by listening to the GSM paging channel. Furthermore, when it is in an idle state, the UE receives all information about how to access the network to initiate a mobile originating call (MOC), as the access information is provided in the SysInfo via BCH of the GSM system.

The following solutions to the problem of how to transfer the UE to the superior RAT could be envisaged:
During connection setup the UE can request a service type and the GSM controlling node BSC (base station controller) can then make a decision to provide the service by itself (e.g. simple voice call) or to activate a superior RAT. In case UMTS is switched on and LTE may need to be activated the UMTS controlling node (RNC) could work in a similar way.

Alternatively, the NAS signaling could be utilized to obtain more details about the requested service / profile of the user.

A further implementation could use the redirect procedure, i.e. releasing the connection and to provide the target RAT within the release message.

As long as the UE is in idle mode, the RAT is typically indicated towards the subscriber is shown on the display of the UE. This means that in case the superior RAT is switched off due to ES reasons, the subscriber would be informed that he/she is served by the legacy technology.

For instance, in a situation where an LTE cell is in an ES-state (i.e. switched off) and an overlaying GSM cell is providing basic coverage, the serving technology shown on the subscriber's mobile device is GSM. This leads to the problem that the subscriber will believe that the network operator is providing a poor quality of service, therefore subscribers will become dissatisfied with the network provider.

No effective solutions to this problem have been provided. In existing networks, the UE is camped on a legacy RAT in case ES is ongoing in a superior RAT. A fully enabled ES inter-RAT mechanism leads to a situation that the idle mode UE is camping on a legacy network but will not be informed about the presence of the LTE (or UMTS) service.

From subscriber perspective this is a major drawback. The subscriber will not be aware of the presence of a superior technology if the respective cell is in ES-state. Considering the extreme differences in QoS capabilities (for example, GSM vs. LTE) the subscriber perception will be dramatically effected. The subscriber who has purchased a state-of-art UE and subscription would assume to get only a basic service on legacy technology. Naturally the subscriber would also not know about any ES measures and that he/she would indeed get better service in case he/she starts a connection. This may lead even to situations that the subscriber refrains from starting any connection as he/she erroneously believes that the desired QoS is not available.

For the operator, the current solution would result in a shrunken coverage of LTE (UMTS) during ES operation. At least the network would appear this way towards the subscribers. The operator may have to accept damage of subscriber perception and could receive customer complaints.

Therefore a solution is required, which overcomes the drawbacks outlined above.

US2009/104907 discloses a method for selecting an alternate wireless communication system for a wireless communication device. EP1915004 discloses a method involving radiating information (CPC) for multiple subscriber stations (UE) by a network sided radio station (BS). The information contains organization information of multiple radio communication systems. US2007019575 discloses a method and system for supporting an evolved universal mobile telecommunication systems (UMTS) terrestrial radio access network (E-UTRAN). The system includes a wireless transmit/receive unit (WTRU), a UTRAN and an E-UTRAN. The UTRAN sends to the WTRU a list of available radio access technologies in a coverage area of the UTRAN.

WO2009/127276 discloses a method of operating a first access network and a second access network, wherein said access networks serve mobile terminals in an access area and the method comprises: selecting one of said first access network and said second access network on the basis of a power consumption assessment; performing a steering operation for the mobile terminals in said access area, comprising sending steering information to the mobile terminals, the steering information indicating to the mobile terminals to preferably use the non-selected access network not being selected; and setting the selected access network to a power-save mode.

US2008/102832 discloses a system, method, and computer-readable medium for a communications system to manage multiple radios and protocol stacks in a network and in a user equipment are provided. When active communications takes place over one radio system, an alternate radio system is managed in such a way that promotes both low-power operations and quick handovers. When communications are idle over all of the networks, one radio network may be assigned to be a primary radio network, and the alternate radio network may be switched off provided all incoming calls are routed to the primary radio network.

### SUMMARY OF THE INVENTION

Accordingly, the invention provides a method of optimizing data exchange in a communications network. The method in eludes providing access to the network via a first radio access technology and a second radio access technology. An indication is sent via the first radio access technology to a subscriber station of an availability of the second radio access technology when the second radio access technology is switched off.

In this way, a subscriber can be made aware that a superior radio access technology is available, even when that superior technology is switched off. Being able to indicate the availability of a switched-off superior radio access technology allows the network operator to demonstrate to its subscribers that it provides good radio coverage.

Advantageously, the second radio access technology provides a higher quality of service than the first radio access technology. For example, the first radio access technology could be GSM and the second radio access technology could be UMTS or LTE, or a combination of both UMTS and LTE. Alternatively, the first radio access technology could be UMTS and the second radio access technology could be LTE.

The indication of the availability of the switched-off second radio access technology may be sent to the subscriber station on a broadcast channel in the first radio access technology, for example in an information element (IE) of a broadcast message.

In an advantageous embodiment, the method further includes displaying the indication of availability of the switched-off second radio access technology on a display of the subscriber station.

The invention also provides a network node for providing access to a communications network via a first radio access technology. The network node includes a transmitter configured to signal an availability of a second radio access technology to a subscriber station via the first radio access technology when the second radio access technology is switched off.

The network node may also include a detector, which is configured to detect a demand from the subscriber station for the switched-off second radio access technology.

The invention further provides a subscriber station. The subscriber station includes a transceiver configured such that the subscriber station can exchange data with a communications network via a first radio access technology and a second radio access technology. The transceiver is configured to receive via the first radio access technology an indication of an availability of a second radio access technology when the second radio access technology is switched off.

Preferably, the subscriber station further includes an indicator for indicating an availability of the switched-off second radio access technology. This indicator may be any means for informing the user of the subscriber station that the second radio technology is available, including any optical visualization device.

The subscriber station may include a display configured to display the indication that the switched-off second radio access technology is available. In this way, a subscriber can see that access to the network is available via a superior radio access technology, even when the superior technology is switched off.

The invention is defined by the independent claims.

The invention will now be described, by way of example only, with reference to specific embodiments, and to the accompanying drawings, in which:

### BRIEF DESCRIPTION OF THE DRAWINGS

- Figure 1 is a simplified schematic diagram of a communications system according to an embodiment of the invention;
- Figure 2 is a simplified schematic diagram of a network node of a communications system according to an embodiment of the invention; and
- Figure 3 is a simplified schematic diagram of a subscriber station according to an embodiment of the invention.

### DETAILED DESCRIPTION OF EXEMPLARY EMBODIMENTS

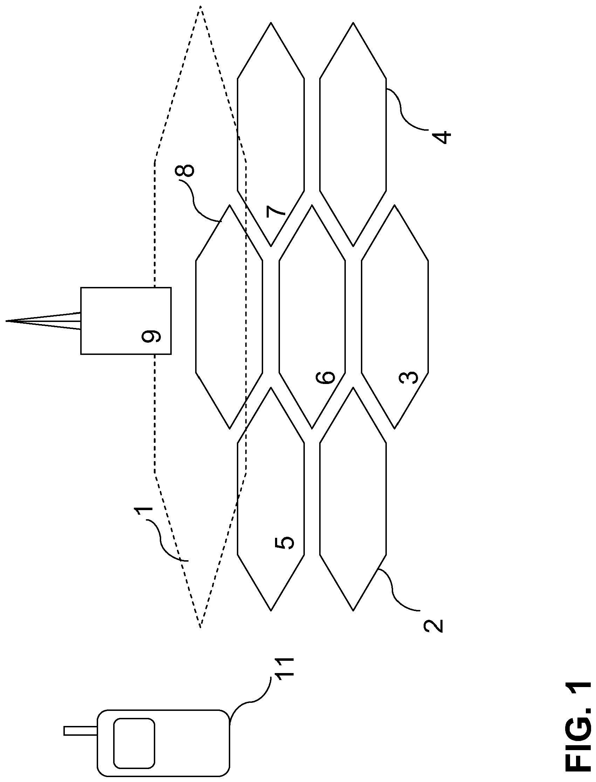

Figure 1 schematically shows one cell 1 of a wireless communications network. The cell 1 provides access to the network via a first, inferior, RAT and smaller cells 2-8 are covered by the cell 1 an provide access to the network via a second, superior, RAT. This means that when the superior RAT is switched off for energy saving purposes, for example, cells 2-8 are switched off but they are covered by cell 1, which can still provide access to the network via the inferior RAT.

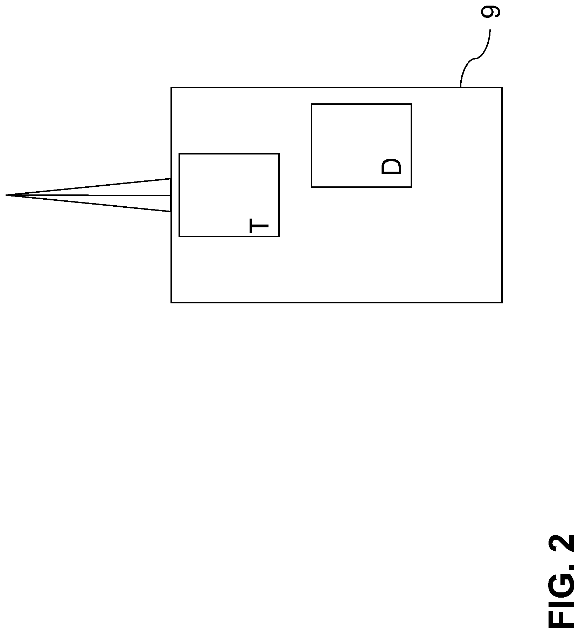

Access to the network via the main cell 1 using the inferior RAT is provided via a base station 9 controlled by a base station controller (not shown here). The base station 9 is shown in Figure 2 and includes a detector D and a transmitter T.

Although the terminology "base station" and "base station controller" is used here, which applies to GSM technology, these terms are replaceable with "Node B" and "radio network controller (RNC)", respectively, in the case of UMTS. Furthermore, in the cells 2-8, the separate functionality of a base station and base station controller may be replaced by an eNode B in the case of LTE technology, whereby the functionality of a base station or Node B and a base station controller or RNC are both contained in the same physical entity.

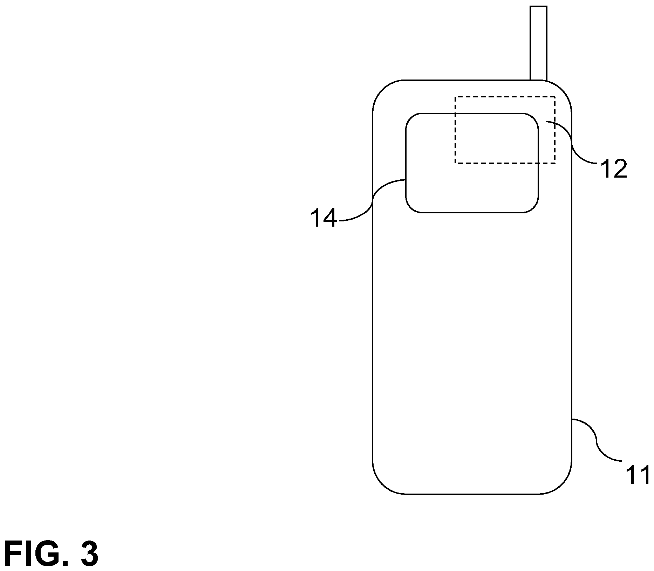

Figure 3 shows a subscriber station or user entity (UE) 11, which can access the network in cell 1 using the inferior RAT via the base station 9 and using the superior RAT in cells 2-8. The UE 11 is capable of exchanging data with the communications network using the inferior RAT and one or more superior RATs. To this end, the UE 11 is provided with a transceiver 12, which is able to receive and transmit data with the network using GSM, UMTS and/or LTE technologies, as well as other technologies such as EDGE. The UE 11 is also provided with a display 14 for displaying the RATs available within the network. Alternatively, the display 14 may be replaced by any technique for indicating an availability of RATs, including any optical visualization technique, such as an LED, for example.

The present invention is particularly advantageous in a situation when the UE 11 is camping on a cell of the network and is in an idle mode. However, the present invention is also applicable when the UE 11 is in active mode and exchanging data with the network.

In a first embodiment of the invention, access to the network is provided by the UMTS radio access technology (RAT) and also by GSM via the base station 9. The cells 2-8 are covered by the main cell 1 so that when the UMTS technology in the cells 2-8 is switched off, for example for energy saving purposes, the UE 11 may still access the network using GSM technology.

Switching off of the UMTS cells 2-8 can occur manually, for example by operating personnel, according to a timing pattern, for example at night, or when a level of UMTS traffic falls below a predetermined level.

The base station controller controlling the base station 9 sends a message to the base station 9 on the logical Broadcast Control Channel that access to the network is available via the switched-off UMTS technology in cells 2-8. The transmitter T in the base station 9 then sends an indication of the availability of the switched-off UMTS technology to the UE 11. A broadcast message indicating the availability of UMTS is sent from the base station 9 to the UE 11 via GSM, for example in 51-multiframe specific TDMA slots.

The UE 11 receives this indication from the base station 9 at the transceiver 12 and displays the indication on the display 14, to indicate to the user that access to the network is available via UMTS. The indication on the display could be a symbol, an LED having different colours, or a data rate in the case where the display 14 is a PC screen. Furthermore, the display 14 could be replaced by any other indicator, including any optical visualization means.

In a second embodiment of the invention, the network consists of LTE and GSM cells. Access to cells 2-8 of the network is provided by the LTE radio access technology (RAT) and access to the cell 1 is provided by GSM via the base station 9. Cells 2-8 are covered by the cell 1 so that when the LTE technology is switched off, the switched-off cells 2-8 are still covered by cell 1 so that the UE 11 may still access the network using GSM technology via the base station 9.

The base station controller controlling the base station 9 sends a message to the base station 9 on the logical Broadcast Control Channel that access to the network is available via LTE. The transmitter T in the base station 9 then sends an indication of the switched-off LTE technology to the UE 11. A broadcast message indicating the availability of LTE is sent from the base station 9 to the UE 11 via GSM, for example in 51-multiframe specific TDMA slots.

The UE 11 receives this indication from the base station 9 at the transceiver 12 and displays the indication on the display 14, to indicate to the user that access to the network is available via LTE. The indication on the display could be a symbol, an LED having different colours, or a data rate in the case where the display 14 is a PC screen. Furthermore, the display 14 could be replaced by any other indicator, including any optical visualization means. The indication of availability of the switched-off LTE technology may be received by the UE 11 when it is in an idle mode.

In a third embodiment of the invention, the network consists of LTE and UMTS cells. Access to cells 2-8 of the network is provided by the LTE radio access technology, covered by cell 1, which provides access to the network also by UMTS via the base station 9 (which in this embodiment is a Node B controlled by an RNC). This means that when the LTE technology is switched off, the switched-off cells 2-8 are still covered by the cell 1 so that the UE 11 may still access the network using UMTS technology via the base station 9.

The control functionality in the base station (eNode B) 10 informs the base station controller controlling the base station 9 that access to the network is available by the switched-off LTE technology.

The base station controller controlling the base station 9 sends a message to the base station 9 on a logical broadcast channel that access to the network is available via the switched-off LTE technology. The transmitter T in the base station 9 then sends an indication of the availability of network access via LTE to the UE 11 while the LTE technology is switched off in cells 2-8. The broadcast message indicating the availability of LTE is sent from the base station 9 to the UE 11 via UMTS.

The UE 11 receives this indication from the base station 9 at the transceiver 12 and displays an indication on the display 14, to indicate to the user that access to the network is available via LTE. The indication on the display could be a symbol, an LED having different colours, or a data rate in the case where the display 14 is a PC screen. Furthermore, the display 14 could be replaced by any other indicator, including any optical visualization means.

In a fourth embodiment of the invention, the network consists of LTE, UMTS and GSM cells so that the cell 1 is covered by GSM and cells 2-8 are LTE and/or UMTS cells. In this embodiment, UMTS is switched off, for example due to energy saving reasons, and an indication of the availability of the switched-off UMTS technology is sent to the UE 11 via GSM Broadcast from the base station 9, as described above for the first embodiment.

In a fifth embodiment of the invention, the network consists of LTE, UMTS and GSM cells so that access to the network is provided via GSM in the cell 1 and access to the network is provided via UMTS and LTE in the cells 2-8, covered by cell 1.

In this embodiment, UMTS and LTE are switched off and an indication of the availability of the switched off technologies UMTS and LTE is sent to the UE 11 via GSM Broadcast as described above.

In an example not part of the invention, the network consists of LTE, UMTS and GSM cells and LTE in cells 2-8 is switched off. Access to the network is provided via the cell 1 covering the switched-off cells 2-8 via both GSM and UMTS RATs.

An availability indication of the switched off LTE technology is sent to the UE 11 via UMTS broadcast, as well as via GSM broadcast if required, as described above.

In a further an example not part of the invention, the UE 3 is connected to the network via GSM in cell 1 by the base station 9 and is using a low demand QoS, for example voice. This means that the superior RAT (cells 2-8) may remain switched off. Later during the connection, the detector D in the base station 9 detects a need for an additional bearer service requiring a higher QoS. This triggers the superior switched-off RAT in one or a plurality of the cells 2-8 to be switched on. The indication of availability of the superior RAT may then be broadcast to the UE 11 as described above.

## Claims

1. A method of optimizing data exchange in a communications network, the method comprising:
providing access to the network via a first radio access technology (1) and a second radio access technology (2 - 8), wherein cells of the second radio access network technology (2 - 8) are temporarily switched off; and
**Characterized in that**
sending via the first radio access technology (1) to a subscriber station (9) an indication of the switched-off second radio access technology (2-8), which would be available if switched on.

2. The method according to claim 1, wherein the second radio access technology (2 - 8) provides a higher quality of service than the first radio access technology (1).

3. The method according to claim 1 or claim 2, wherein the step of sending comprises signalling an availability of the switched-off second radio access technology (2 - 8) to the subscriber station on a broadcast channel in the first radio access technology (1).

4. The method according to any of claims 1 to 3, wherein the first radio access technology (1) is GSM and the second radio access technology (2 - 8) is UMTS and/or LTE.

5. The method according to any of claims 1 to 3, wherein the first radio access technology (1) is UMTS and the second radio access technology (2 - 8) is LTE.

6. The method according to any of claims 1 to 5, further comprising displaying the indication of availability of the switched-off second radio access technology (2 - 8) on the subscriber station (9).

7. A network node for providing access to a communications network, wherein the network node is configured to:
provide an access to the network via a first radio access technology(1) and a second radio access technology (2 - 8), wherein cells of the second radio access network technology (2 - 8) are temporarily switched off; and
**Characterized in that**
send via the first radio access technology (1) to a subscriber station (9) an indication of the switched-off second radio access technology (2-8), which would be available if switched on.

8. The network node according to claim 7, further comprising a detector (D) configured to detect a demand from the subscriber station for the switched-off second radio access technology (2 - 8).

9. A subscriber station, comprising a transceiver configured such that the subscriber station can exchange data with a communications network via a first radio access technology (1) and a second radio access technology (2 - 8),), wherein cells of the second radio access network technology (2 - 8) are temporarily switched off and **characterized in that** configured to receive via the first radio access technology (1) an indication of the switched-off second radio access technology (2-8), which would be available if switched on.

10. The subscriber station according to claim 9, further comprising an indicator for indicating that the switched-off second radio access technology (2 - 8) is available.

11. The subscriber station according to claim 10, wherein the indicator is an optical visualization device.

12. The subscriber station according to claim 9, further comprising a display configured to display the indication that the switched-off second radio access technology (2 - 8) is available.

## Patentansprüche

1. Verfahren zur Datenaustauschoptimierung in einem Kommunikationsnetzwerk, wobei das Verfahren die folgenden Schritte umfasst:
Bereitstellen eines Zugangs zu einem Netzwerk über eine erste Funkzugangstechnologie (1) und eine zweite Funkzugangstechnologie (2-8), wobei Zellen der zweiten Funkzugangsnetzwerktechnologie (2-8) vorübergehend ausgeschaltet sind; und
**gekennzeichnet durch**
ein Senden, über die erste Funkzugangstechnologie (1), eines Hinweises zu einer Teilnehmerstation (9) auf die ausgeschaltete zweite Funkzugangstechnologie (2-8), die zur Verfügung stehen würde, falls sie eingeschaltet ist.

2. Verfahren nach Anspruch 1, wobei die zweite Funkzugangstechnologie (2-8) eine höhere Servicequalität als die erste Funkzugangstechnologie (1) bereitstellt.

3. Verfahren nach Anspruch 1 oder Anspruch 2, wobei der Schritt des Sendens ein Signalisieren einer Verfügbarkeit der ausgeschalteten zweiten Funkzugangstechnologie (2-8) zu der Teilnehmerstation auf einem Broadcast-Kanal der ersten Funkzugangstechnologie (1) umfasst.

4. Verfahren nach einem der Ansprüche 1 bis 3, wobei die erste Funkzugangstechnologie (1) GSM ist und die zweite Funkzugangstechnologie (2-8) UMTS und/oder LTE ist.

5. Verfahren nach einem der Ansprüche 1 bis 3, wobei die erste Funkzugangstechnologie (1) UMTS ist und die zweite Funkzugangstechnologie (2-8) LTE ist.

6. Verfahren nach einem der Ansprüche 1 bis 5, ferner mit einem Anzeigen des Hinweises auf Verfügbarkeit der ausgeschalteten zweiten Funkzugangstechnologie (2-8) an die Teilnehmerstation (9).

7. Netzwerkknoten zum Bereitstellen eines Zugangs zu einem Kommunikationsnetzwerk, wobei der Netzwerkknoten dazu eingerichtet ist, um:
einen Zugang zu dem Netzwerk über eine erste Funkzugangstechnologie (1) und eine zweite Funkzugangstechnologie (2-8) bereitzustellen, wobei Zellen der zweiten Funkzugangsnetzwerktechnologie (2-8) vorübergehend ausgeschalteten sind; und
**gekennzeichnet durch**
ein Senden, über die erste Funkzugangstechnologie (1) zu einer Teilnehmerstation (9), eines Hinweises auf die ausgeschaltete zweite Funkzugangstechnologie (2-8), die verfügbar sein würde, falls sie eingeschaltet ist.

8. Netzwerkknoten nach Anspruch 7, ferner mit einer Erfassungseinrichtung (D), die dazu eingerichtet ist, um eine Anfrage von der Teilnehmerstation für die ausgeschaltete zweite Funkzugangstechnologie (2-8) zu empfangen.

9. Teilnehmerstation, mit einem Transceiver, der derart eingerichtet ist, dass die Teilnehmerstation Daten mit einem Kommunikationsnetzwerk über eine erste Funkzugangstechnologie (1) und eine zweite Funkzugangstechnologie (2-8) austauschen kann,), wobei Zellen der zweiten Funkzugangsnetzwerktechnologie (2-8) vorübergehend ausgeschalteten sind und **dadurch gekennzeichnet, dass** er dazu eingerichtet ist, um einen Hinweis auf die ausgeschaltete zweite Funkzugangstechnologie (2-8), die verfügbar wäre, falls sie eingeschaltet ist, über die erste Funkzugangstechnologie (1) zu empfangen.

10. Teilnehmerstation nach Anspruch 9, ferner mit einer Anzeigeeinrichtung zum Anzeigen, dass die ausgeschaltete zweite Funkzugangstechnologie (2-8) verfügbar ist.

11. Teilnehmerstation nach Anspruch 10, wobei die Anzeigeeinrichtung eine optische Visualisierungsvorrichtung ist.

12. Teilnehmerstation nach Anspruch 9, ferner mit einer Anzeigeeinrichtung, die dazu eingerichtet ist, den Hinweis anzuzeigen, dass die ausgeschaltete zweite Funkzugangstechnologie (2-8) verfügbar ist.

## Revendications

1. Procédé d'optimisation d'un échange de données dans un réseau de communication, le procédé comprenant :
la fourniture d'un accès au réseau via une première technologie d'accès radio (1) et une seconde technologie d'accès radio (2 - 8), des cellules de la seconde technologue d'accès radio au réseau (2 - 8) n'étant temporairement pas actives, et
**caractérisé par**
l'envoi à une station d'abonné (9), via la première technologie d'accès radio (1), d'une indication d'une disponibilité de la seconde technologie d'accès radio (2 - 8), quand la seconde technologie radio n'est pas active.

2. Procédé suivant la revendication 1, dans lequel la seconde technologie d'accès radio (2 - 8) fournit une meilleure qualité de service que la première technologie d'accès radio (1).

3. Procédé suivant la revendication 1 ou la revendication 2, dans lequel l'étape de l'envoi comprend la signalisation d'une disponibilité de la seconde technologie d'accès radio qui n'est pas active (2 - 8) à la station d'abonné sur un canal de diffusion dans la première technologie d'accès radio (1).

4. Procédé suivant une des revendications 1 à 3, dans lequel la première technologie d'accès radio (1) est GSM et la seconde technologie d'accès radio (2 - 8) est SUTM et/ou LTE.

5. Procédé suivant une des revendications 1 à 3, dans lequel la première technologie d'accès radio (1) est SUTM et la seconde technologie d'accès radio (2 - 8) est LTE.

6. Procédé suivant une des revendications 1 à 5, le procédé comprenant en plus l'affichage de l'indication de disponibilité de la seconde technologie d'accès radio qui n'est pas active (2 - 8) sur la station d'abonné (9).

7. Nœud de réseau destiné à fournir l'accès à un réseau de communication, le nœud de réseau étant configuré pour :
fournir un accès au réseau via une première technologie d'accès radio (1) et une seconde technologie d'accès radio (2 - 8), des cellules de la seconde technologie d'accès radio (2 - 8), à un réseau n'étant temporairement pas actives, et
**caractérisé par**
l'envoi à une station d'abonné (9), via la première technologie d'accès radio (1), une indication d'une disponibilité de la seconde technologie d'accès radio (2 - 8), quand la seconde technologie radio n'est pas active.

8. Nœud de réseau suivant la revendication 7, le nœud de réseau comprenant en plus un détecteur (D) configuré pour détecter une demande provenant de la station d'abonné de la seconde technologie d'accès radio (2 - 8) qui n'est pas active.

9. Station d'abonné comprenant un émetteur-récepteur configuré de telle sorte que la station d'abonné peut échanger des données avec un réseau de communication via une première technologie d'accès radio (1) et une seconde technologie d'accès radio (2 - 8), les cellules de la seconde technologie d'accès radio (2 - 8) n'étant temporairement pas actives et **caractérisée en ce que** la station d'abonné est configurée pour recevoir, via la première technologie d'accès radio (1), une indication d'une disponibilité de la seconde technologie d'accès radio (2 - 8), quand la seconde technologie radio (2 - 8), n'est pas active.

10. Station d'abonné suivant la revendication 9, la station d'abonné comprenant en plus un indicateur destiné à indiquer que la seconde technologie d'accès radio (2 - 8) qui n'est pas active est disponible.

11. Station d'abonné suivant la revendication 10, dont l'indicateur est un dispositif optique de visualisation.

12. Station d'abonné suivant la revendication 9, la station d'abonné comprenant en plus un écran configuré pour afficher l'indication que la seconde technologique d'accès radio (2 - 8) qui n'est pas active est disponible.
